Europäisches Patentamt

European Patent Office

Office européen des brevets

(11) Publication number: **0 044 565 B1**

# EUROPEAN PATENT SPECIFICATION

(45) Date of publication of patent specification: **03.07.91**  (51) Int. Cl.⁵: **G05B 19/417**

(21) Application number: **81105757.9**

(22) Date of filing: **21.07.81**

(54) Improved flexible manufacturing system.

(30) Priority: **21.07.80 US 170820**

(43) Date of publication of application:
**27.01.82 Bulletin 82/04**

(45) Publication of the grant of the patent:
**03.07.91 Bulletin 91/27**

(84) Designated Contracting States:
**CH DE FR GB IT LI NL SE**

(56) References cited:
**GB-A- 1 377 966**      **US-A- 995 005**
**US-A- 3 720 814**     **US-A- 3 882 305**
**US-A- 3 909 922**     **US-A- 4 029 950**

**ASTRONAUTICS & AERONAUTICS, vol. 18,
March 1980, no. 3, New York, US P. GITIO
"Direct numerical control (DNC) interfacing
with CAD/CAM", pages 52-57**

**NUMERICAL CONTROL SOCIETY, Proceed-
ings of the annual meeting and technical
conference, March 31 - April 3, 1974, Spring
Lake, US P.R. HAAS "Flexible manufacturing
systems", pages 288-301**

(73) Proprietor: **KEARNEY & TRECKER CORPORA-
TION**
**11000 Theodore Trecker Way
West Allis Wisconsin 53214(US)**

(72) Inventor: **Johnstone, Richard
20300 West Gebhardt Road
Brookfield Wisconsin 53005(US)**
Inventor: **Kurtzhalts, Jody E.
507 East Oklahoma Avenue
Milwaukee Winsconsin 53207(US)**

(74) Representative: **Baillie, Iain Cameron et al
c/o Ladas & Parry Isartorplatz 5
W-8000 München 2(DE)**

## Description

This invention relates to a manufacturing system capable of automatically performing a plurality of machining operations on each of a plurality of unfinished parts, and more specifically, to a control apparatus for regulating the operation of such a manufacturing system.

Until recently, mid-volume production of machined parts has only been possible by the use of a transfer line of dedicated machinery, or by use of a large number of conventional machine tools, each manned by a skilled operator. While the use of a transfer line to produce machined parts affords high volume part production, part flexibility, that is, the ability to produce parts of differing types or shapes, is usually not possible. In order to produce machined parts of a different type or shape, it is usually necessary to have a separate transfer line for each part type, thereby requiring a tremendous capital expenditure since each transfer line is very costly. Achieving mid-volume production of machined parts by the use of a large number of conventional machines, although affording the advantage of part flexibility, incurs the disadvantage of high direct labor costs due to the necessity of having a skilled operator at each machine.

With the advent of flexible manufacturing systems, first developed in the early 1970's, mid-volume production of machined parts can now be accomplished without substantial direct labor costs while still allowing part flexibility. Typically, present day flexible manufacturing systems include a plurality of computer numerically controlled (CNC) machine tools situated about the perimeter of a track that carries a set of pallet carrying transporters propelled by a transporter drive mechanism about the track between the CNC machine tools and one or more load/unload stations where part carrying pallets are loaded onto or unloaded from each of the transporters. Each of the CNC machine tools, as well as the transporter drive mechanism, is under the control of a central computer which, in response to data entered thereto from one or more data entry terminals indicative of the type of part carrying pallet loaded onto each transporter at the load/unload stations, initiates movement of the transporter to a CNC machine tool. Once the part carrying pallet is moved to a machine tool and the part carrying pallet is shuttled from the cart to the machine tool, the central computer supplies the CNC machine tool with blocks of a machine part program in accordance with the type of part then at the CNC machine tool. Use of CNC machine tools to perform the desired machining operations reduces the number of machines required and, additionally, permits part flexibility since machining operations performed by each CNC machine tool can be varied by altering the machine part program supplied thereto from the central computer.

The major disadvantage of present day flexible manufacturing systems is their inability to sustain continued parts production in the event that the central computer is rendered inoperative due either to planned preventive maintenance or to central computer malfunction. Since the central computer supplies each CNC machine tool with the part program in blocks, once the central computer becomes inoperative there is no other source from which the machines can be supplied with part programs to allow continued machine tool operation. Thus, the CNC machine tools must be idled during such periods of central computer inoperation. Even if such periods of central computer in operation are brief, a small interruption in parts production can be costly, particularly, if production of other parts or assemblies is dependent thereupon.

The transmission of machine NC part programs from the central computer to each CNC machine tool in blocks incurs the further disadvantage that it limits the number of machine tools that can be controlled by a single central computer if satisfactory machine tool performance is to be maintained. Regardless of the type of central computer employed, computer instruction execution cycle time is finite and memory space is limited so, therefore, only a given amount of information can be transferred from the central computer during each instruction execution cycle, thus limiting the number of machines that can be controlled thereby. To control additional CNC machine tools in excess of the total number controllable by a single central computer, additional processing hardware is required which greatly increases system cost and complexity.

It is an object of the present invention to provide a flexible manufacturing system which may be operated in a semi-automatic mode to maintain continued production of parts in the event of central computer failure.

Accordingly the present invention provides a flexible manufacturing system capable of automated production of machined parts, said system comprising a plurality of computer numerically controlled machining centers;

a transport system having at least one load/unload station where unfinished parts are entered and finished parts are discharged, said transport system moving parts from each said load/unload station to said computer numerically controlled machining centers in accordance with electrical signals supplied to said transport system and said transport system generating data indicative of the part location during part movement;

at least one data entry and display unit located in proximity with a respective one of said load/unload stations for transmitting data entered thereto by an operator indicative of the part type entered at said respective one of said load/unload stations;

a supervisory control computer system coupled to each of said computer numerically controlled machining centers; and coupled to each said data entry and display unit for processing data therefrom to generate routing data indicative of the desired path of parts from said load/unload station to said computer numerically controlled machining centers;

a material handling system controller coupled to said supervisory control computer system to receive said routing data therefrom, said material handling system controller being coupled to said transport system for supplying said transport system with said electrical signals to cause movement of parts in accordance with said routing data; and that in the absence of said routing data from said supervisory control computer system the movement of parts is carried out in accordance with manually entered routing data and manually entered transport system commands to said handling system controller;

said material handling system controller is coupled to each said computer numerically controlled machining center, and in accordance with said data generated by said transport system indicative of part location, said material handling system controller supplies said machine tool commands to said numerically controlled machining centers;

and said plurality of computer numerically controlled machining centers are each provided by the supervisory control computer system with a plurality of sets of machine NC part programs and a program map, each said computer numerically controlled machining center executing a selected one of said sets of machine NC part programs in accordance with said program map in response to said machine tool commands and in the absence of machine tool commands, in response to operator entered machine tool commands.

Briefly, in accordance with the preferred embodiment of the invention, an improved flexible manufacturing system for automated production of machined parts comprises a plurality of computer numerically controlled machining centers which are each provided with a plurality of sets of machine NC part programs and program maps by a supervisory control computer system. The supervisory control computer system also controls a material handling system controller which, in turn, controls a transport system that moves parts between one or more load/unload stations, where unfinished parts are entered and finished parts are discharged, and the computer numerically controlled machining centers. Located in proximity with each load/unload station is a data entry and display unit through which data, indicative of a then entered unfinished part, is transmitted to the supervisory control computer system. In response to data transmitted thereto from the data entry and display unit, the supervisory control computer system provides the material handling system controller with routing data which is translated by the material handling system controller into transportation system.

In this manner, semi-automatic and manual operation, resepctively, of the flexible manufacturing system can be sustained during intervals when the supervisory control computer system is inoperative.

In the drawings:

Figure 1 is a perspective view of the preferred embodiment of the flexible manufacturing system of the present invention;

Figs. 1a and 1b are perspective views of a pair of computer numerically controlled machining centers, respectively, of the flexible manufacturing system of Fig. 1;

Fig. 2 is an electrical block diagram of the flexible manufacturing system of Fig. 1;

Fig. 3 is an electrical block diagram of the supervisory control computer system which comprises a portion of the flexible manufacturing system of Fig. 1;

Fig. 4 is an electrical block diagram of the material handling system controller which comprises a portion of the flexible manufacturing system of Fig. 1;

Fig. 5 is an electrical block diagram of the machine control system of one of the machines illustrated in Figs. 1a and 1b;

Fig. 6 is a flow chart diagram of a portion of the software executed by the supervisory control computer system of Fig. 3; and

Fig. 7 is a flow chart diagram of a portion of the software executed by the material handling control system of Fig. 4.

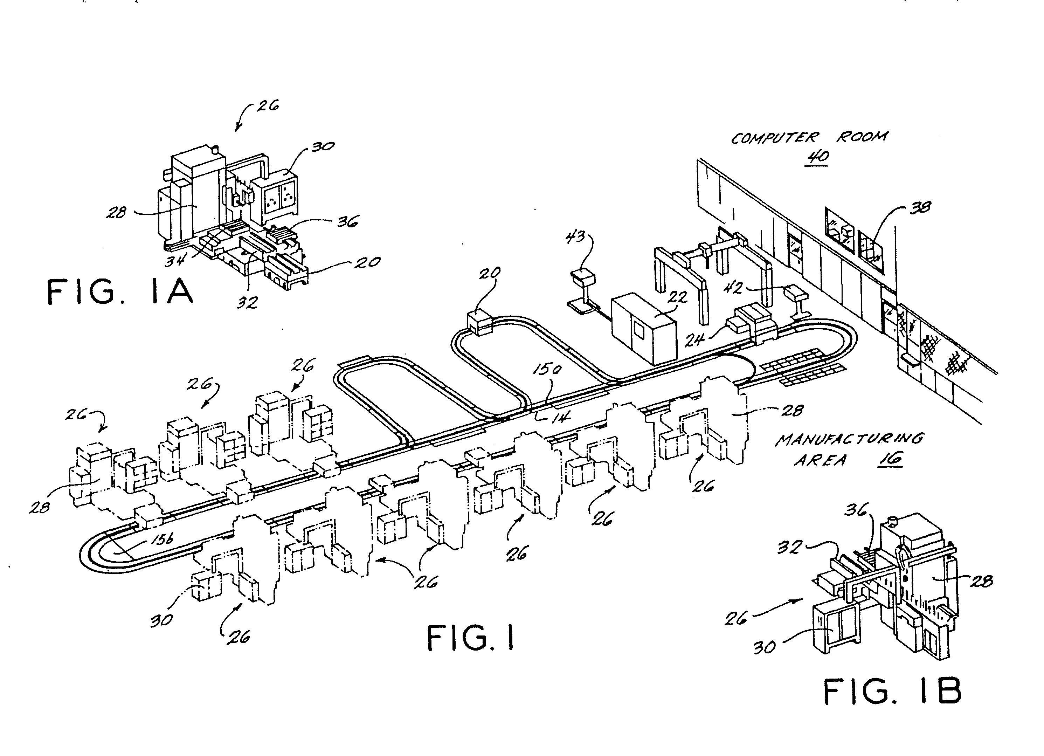

Figure 1 illustrates a perspective view of a flexible manufacturing system 10 comprising a transport system which includes an endless track or loop 14 embedded within the floor of a manufacturing area 16. Within track 14 is a chain 15a which is driven by a chain drive mechanism 15b such as are well-known in the art. Each of a plurality of carts 20 are detachably connected to chain 15a by means of a drop pin carried by the cart, the drop pin on each cart being raised and lowered by means of ramps (not shown) disposed in the floor of the manufacturing area 16 about track 14. Each of the ramps is raised and lowered, to engage the drop pin on the cart when the cart passes over the ramp, by an associated solenoid (not shown). Chain drive mechanism 15b, which propels the chain in track 14, and each of the ramp solenoids which raise and lower a corresponding one of the ramps to decouple and couple, respectively, one of the carts to the chain, are controlled by a material handling system controller (MHSC) 22. In response to routing data provided thereto, MHSC 22 supplies electrical signals to the chain drive mechanism and to the ramp solenoids to initiate movement of carts 20 between one or more load/unload stations 24, where parts carrying pallets are loaded onto or off of each cart, and a plurality of computer numerically controlled (CNC) machining centers 26 situated about the perimeter of track 14.

Referring now to Figs. 1a and 1b, each CNC machining center 26 comprises a numerically controlled (N/C) machine tool 28 which is coupled to and controlled by an associated machine control system 30 (further described hereinafter). Each of the CNC machining centers 26 also includes a shuttle assembly 32 situated between track 14 and machine tool 28 and controlled by MHSC 22 illustrated in Fig. 1. A plurality of trip switches (not shown) are disposed in track 14 and are each connected to MHSC 22. When a cart 20 arrives at a particular one of machining centers 26, as indicated by the actuation of a corresponding trip switch, MHSC 22 accordingly actuates shuttle assembly 32 at the CNC machining center through machine control system 30 to cause transfer of the part carrying pallet from cart 20 to the table 34 of N/C machine tool 28. As the part carrying pallet is transferred from cart 20 to table 34 by shuttle assembly 32, a pallet reader 36 mounted on shuttle assembly 32 "reads" the part carrying pallet, that is to say, pallet reader 36 reads the code on the pallet which is indicative of the type of part carried thereby. Data from the pallet reader 36, indicative of the part type, is transmitted to machine control system 30 which, in turn, transmits this data to MHSC 22. MHSC 22 then validates the pallet code to determine what part type is at the machine before transmitting commands to the machine control system.

MHSC 22 and each machine control system 30 are coupled to a supervisory control computer system (SCCS) 38 which serves as the central control for the flexible manufacturing system. SCCS 38 is located in a computer room 40 situated adjacent to and in line of sight with manufacturing area 16. Computer room 40 has a controlled environment to prevent against possible SCCS 38 malfunctions due to contamination and variations in temperature-humidity.

SCCS 38 is provided at the outset of flexible manufacturing system operation with production requirements and material resource information, as well as machine NC part programs, program maps and SCCS software. Selected sets of machine NC part programs are, thereafter transmitted from SCCS 38 to each machine control system 30 of an associated one of CNC machining centers 26, illustrated in Fig. 1, for storage and later execution in response to machine tool commands from MHSC 22. In addition to supplying machine NC part programs to each machine control system, SCCS 38 also supplies each machine control system with a part program map which cross references the pallet number to a separate one of the machine NC part programs. These part program maps are dynamically updated at periodic intervals. As will become better understood hereinafter, transmission of whole sets of machine NC part programs and a part program map from SCCS 38 to each machine control system 30 at the outset of flexible manufacturing system operation permits continued flexible manufacturing system operation in the event SCCS 38 becomes inoperative.

During flexible manufacturing system operation, SCCS 38 processes production requirement information indicative of the rate of part production, material resource data indicative of the number and type of CNC machines and bank data, indicative of the quantity of raw materials available, and accordingly, determines which part type is to be loaded at one of the load/unload stations 24. Information indicative of the part type to be loaded at the load/unload station is then displayed on a data entry and display unit 42 situated adjacent to the load/unload station to advise that person (referred as a "parts-handler") at the load/unload station to load the identified part type onto a cart then at the load/unload station. Thereafter, the parts-handler confirms the loading of the identified part by entering a confirm signal at data entry and display unit 42 which is then transmitted to SCCS 38. In response to the confirm signal, SCCS 38 generates routing data, indicative of desired path of the then loaded cart between the load/unload station to one or more of the CNC machining centers 26 and transmits such data to the MHSC 22. MHSC 22 then initiates movement of carts 20 to the selected one or more CNC machining centers 26 in accordance with the routing data generated by SCCS 38.

In the event that SCCS 38 becomes inoperative, as may occur when SCCS 38 is shut down or malfunctions, flexible manufacturing system operation can be sustained with MHSC 22 serving as the central controller. During intervals of SCCS 38 inoperation, MHSC 22 is operated in a semi-automatic mode to initiate the movement of carts 20 and the operation of machine shuttle assemblies 32 in accordance with routing information entered by an operator directly to MHSC 22 through controls on MHSC 22, or through a remote data entry and display unit 43 coupled to MHSC 22. MHSC 22 can also be operated manually to manipulate the movement of carts 20 and the operation of shuttle assemblies 32 in accordance with operator-entered commands.

Should MHSC 22 also become inoperative during the interval that SCCS is inoperative, each machine control system 30 associated with each CNC machining center 26 can be manually manipulated to execute one of the previously supplied sets of machine NC part programs corresponding to the pallet number read by the pallet reader in accordance with the program map. The ability to manually manipulate MHSC 22 and machine control system 30 in the event of SCCS 38 failure avoids the need for complete shutdown of the flexible manufacturing system which has heretofore been required in the event of inoperation of the central computer.

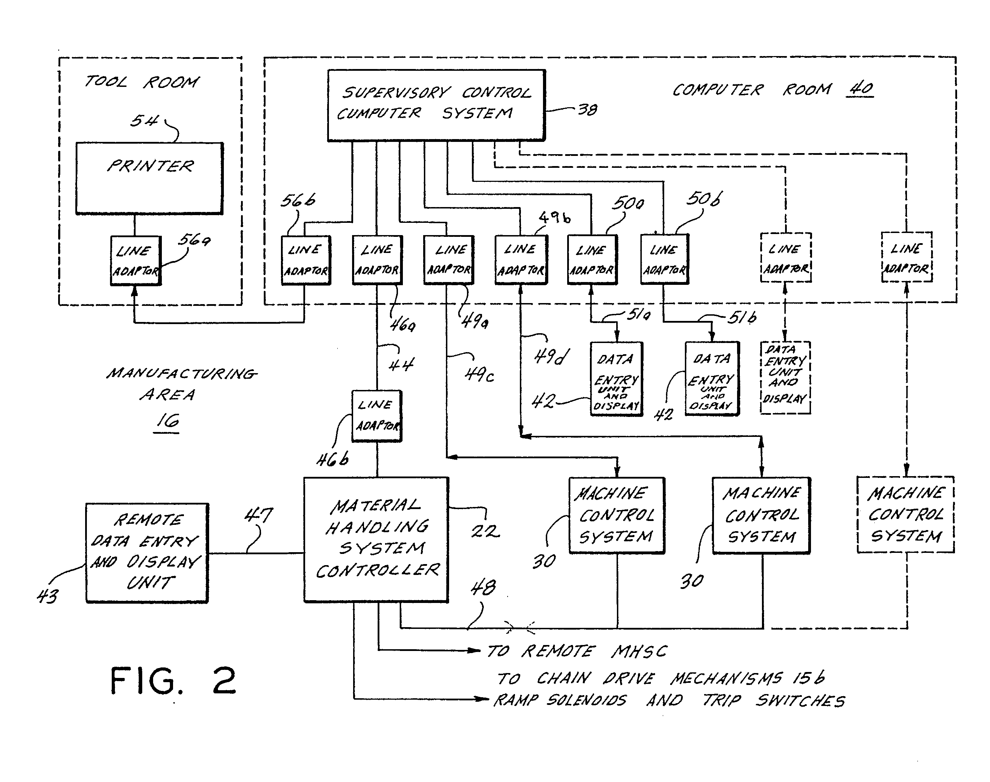

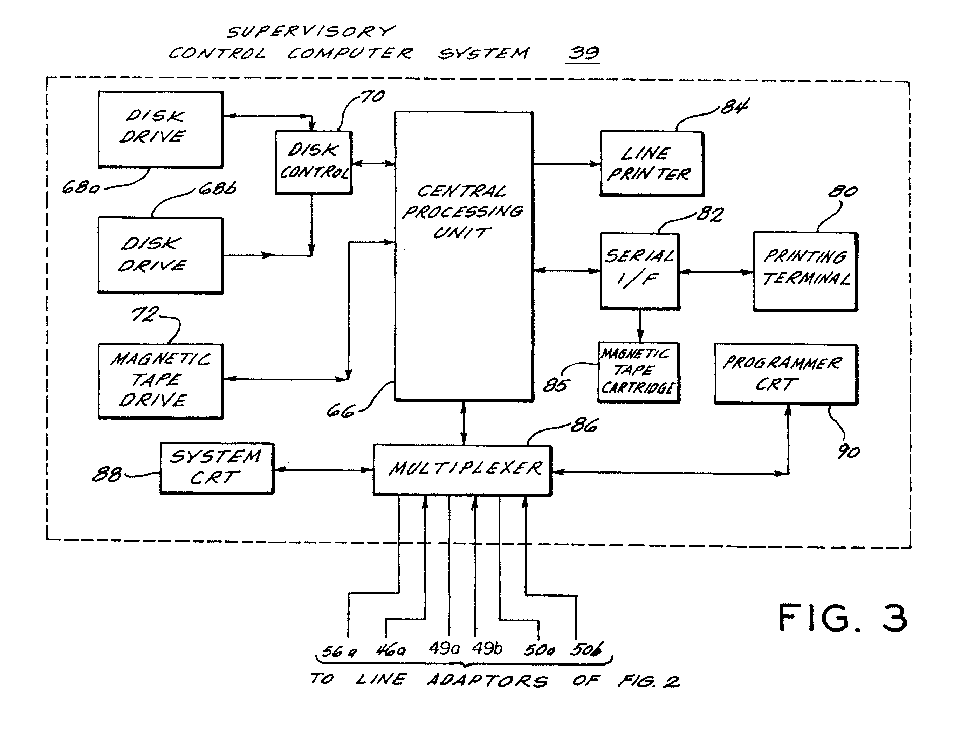

Figure 2 illustrates the electrical block diagram of flexible manufacturing system 10 shown in Fig. 1. SCCS 38, located in computer room 40, is electrically linked through a high speed data bus 44 by a pair of line adapters 46a and 46b to MHSC 22 located in manufacturing area 16. Line adapters 46a and 46b are configured of identical circuits which each convert EIA RS-232 type signals into EIA RS-422 type signals and vice versa. Typically, MHSC 22 is subject to undesirable electrical interference due to its proximity to the electrical machinery located in manufacturing area 16. Since EIA RS-422 type signals are less susceptible to such electrical interference, it is more advantageous to transmit EIA RS-422 type signals across high speed data bus 44 between SCCS 38 and MHSC 22 rather than to transmit EIA RS-232 type signals which are normally produced by SCCS 38.

MHSC 22 is coupled via a bi-directional data bus 47 to remote data entry and display unit 43 thereby allowing information, such as operator entered routing data and operator entered shuttle and cart commands, to be transmitted to MHSC 22, and information concerning cart and shuttle status to be transmitted from MHSC 22 to remote data entry and display unit 43 for display to the operator. Each machine control system 30 of each CNC machining center is coupled to MHSC 22 by a low speed bi-directional data bus 48 to provide a completed path for the transmission of pallet reader data from each machine control system 30 to MHSC 22 and for the transmission of shuttle commands and machine tool commands to each machine control system 30 from MHSC 22 to initiate shuttling of a part carrying pallet from a cart then at the machining center to the machine table, and to initiate execution of a selected one of the machine part programs, respectively. MHSC 22 is further coupled to chain drive mechanism 15b, and to the trip switches and to the ramp solenoids in track 14 to control the movement of carts 20 about the track. MHSC 22 may also be connected to a remote MHSC should the transport system of the flexible manufacturing system be too large as to be controllable by a single MHSC.

SCCS 38 is coupled separately to each machine control system 30 through a high speed data bus and a line adapter. Thus, each of the pair of machine control systems 30 illustrated in Fig. 2 is separately coupled to SCCS 38 through a separate one of line adapters 49a and 49b, respectively, and high speed data buses 49c and 49d, respectively, line adapters 49a and 49b each being configured identically to line adapters 46a and 46b. Each high speed data bus and line adapter carries sets of machine NC part programs and part program maps from SCCS 38 to each machine control system 30 and carries information from each machine control system indicative of machine tool parameters, such as cutting tool use, machine cycle time, and machine usage, to name a few, back to SCCS 38. SCCS 38 is capable of controlling a large number of CNC machining centers provided that each additional machine control system, as indicated by dashed lines, is coupled to SCCS 38 through a separate high speed data bus and line adapter, both illustrated by dashed lines. Each data entry and display unit 42 is separately coupled to SCCS 38 through a line adapter and a high speed data bus, and thus, each of the pair of data entry units 42, illustrated in Fig. 2, is coupled through a separate one of line adapters 50a and 50b, respectively, and a separate one of data buses 51a and 51b, respectively, to the SCCS. Additional data entry units, as indicated by dashed lines, may each be separately coupled to SCCS 38 by the addition of line adapter and high speed data bus, both illustrated by dashed lines.

To provide a visual display of cutting tool usuage, a printer 54, typically situated in the tool room or such other location where cutting tools for each CNC machining center are stored, is coupled to SCCS 38 through a data bus 55 and a pair of line adapters 56a and 56b, each line adapter being configured identically to line adapters 46a and 46b. By displaying the cumulative cutting tool usage in excess of a predetermined limit, printer 54 apprises maintenance personnel of the need to replace worn cutting tools.

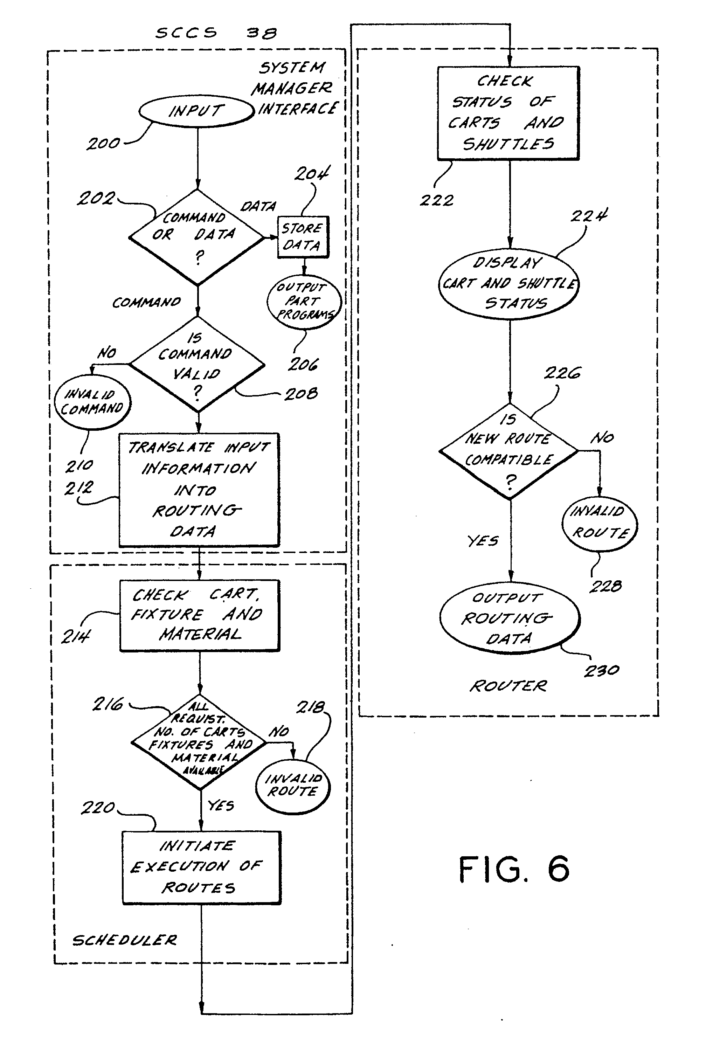

Referring to Fig. 3, there is shown a block diagram of SCCS 38. In the presently preferred embodiment, SCCS 38 comprises a central processing unit (CPU) 66, typically configured of a Model PDP 11/44 or a Model PDP 11/60 processor as manufactured by Digital Equipment Corporation, Maynard, Massachusetts. A pair of magnetic disk drives 68a and 68b, each typically configured of a Digital Equipment Corporation Model RK 07 disk drive, are coupled to CPU 66 through a disk controller 70, typically configured of a Digital Equipment Corporation Model RK 711 disk controller. Magnetic disk drives 68a and 68b serve as the primary means for storing SCCS software (described hereinafter with respect to Fig. 6), which is executed by CPU 66 during flexible manufacturing system operation. A magnetic tape drive 72, typically configured of a Model TS 11 magnetic tape system, as manufactured by Digital Equipment Corporation, is coupled to CPU 66, and in the event of an electrical or mechanical failure of disk memories 68a and 68b, magnetic tape unit 72 then serves as the primary means for storing SCCS software. Input data encoded on magnetic tape can also be inputted to CPU 66 from tape drive 72.

A printing terminal 80, typically configured of a Digital Equipment Model LA 120 terminal, is coupled through a serial interface 82 to CPU 66 to permit operator communication with CPU 66. A high speed line printer 84, typically configured of a Digital Equipment Model LP 11 line printer, is coupled to CPU 66 and provides a quick permanent paper record of CPU 66 data transmitted thereto. If desired, a magnetic tape cartridge unit 85, typically configured of a Digital Equipment Corporation Model TU 58 tape cartridge unit, can be connected to serial interface 82 to allow input of pre-existing machine NC part programs to CPU 66 for transmission to CNC machining center 26 illustrated in Fig. 1.

A digital multiplexer 86, typically configured of a pair of Digital Equipment Model DZ 11E multiplexers, couples CPU 66 to line adapters 46a, 49a, 49b, 50b and 56b, all illustrated in Fig. 2, and to a pair of cathode ray tube (CRT) terminals 88 and 90. CRT 88 terminal is designated as the system CRT, and it is through this terminal that information is entered to CPU 66, such as production data, resource data, bank data and path data, the path data being indicative of all the different possible or logical paths between the CNC machining centers and the load/unload stations, rather than the actual or physical paths. System CRT 88 also serves to display diagnostic and status information, as well as periodic reports concerning machine cycle time and tool use. CRT terminal 90 is designated as the programmer cathode ray tube terminal, and it is through this terminal, as well as magnetic tape unit 72, that SCCS software is entered into CPU 66. The SCCS software consists of three major programs, the system manager interface (SMI), the scheduler (SCHED), and the ROUTER, which are each described in greater detail with respect to Fig. 6. In addition, part program files, as well as operator instructions, may also be entered into CPU 66 through programmer CRT 90.

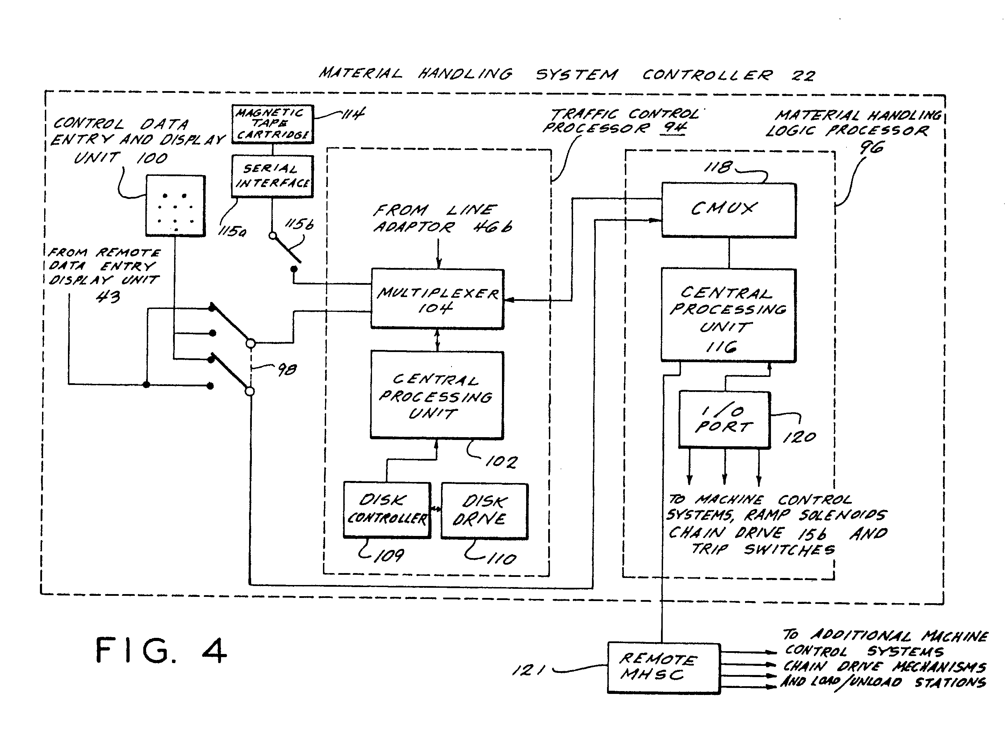

The details of MHSC 22 are illustrated in Fig. 4. MHSC 22 comprises two processors, a traffic control processor (TCP) 94 and a material handling logic processor (MHLP) 96 for storing manually entered routing data and manually entered transport system commands. TCP 94 serves as the link between SCCS 38 (illustrated in Fig. 2) and MHLP 96 and translates routing information produced by SCCS 38 into cart and shuttle commands which are transmitted to MHLP 96. MHLP 96 then translates the cart and shuttle commands supplied thereto from TCP 94 into electrical signals which are transmitted to chain drive mechanism 15b, the ramp solenoids, and to the control apparatus 30 of each CNC machining center 26, to initiate movement of carts 20 about track 14, illustrated in Fig. 1, and shuttling of a part carrying pallet from a cart to the table of an N/C machine. A double pole, double throw switch 98 couples TCP 94 between a control data entry and display unit 100 mounted on the front panel of the material handling system enclosure and remote data entry and display unit 43, illustrated in Fig. 2, and couples MHLP 96 between remote data entry and display unit 43 and control data entry and display unit 100, respectively. Should SCCS 38 become inoperative, thereby ceasing to transmit routing data to MHSC 22, then semi-automatic flexible manufacturing system operation can readily be facilitated by MHSC 22 in accordance with operator generated routing data entered through either control data entry and display unit 100 or remote data entry and display unit 43 to TCP 94. If desired, the flexible manufacturing system can be operated manually in accordance with operator generated cart and shuttle commands entered to MHLP 96 through either remote data entry and display unit 43 or control data entry and display unit 100.

In the presently preferred embodiment, TCP 94 comprises a central processing unit (CPU) 102, typically configured of a Digital Equipment Model LSI 11/23 processor. A multiplexer 104 couples CPU 102 to line adaptor 46b (Fig. 2), as well as to switch 98 and MHLP 96. Typically, multiplexer 104 is configured of a Digital Equipment Model MBX 11C multiplexer and serves to couple CPU 102 to SCCS 38.

Coupled to CPU 102 is a disk controller 108, which is typically configured of a Model DZ 201 controller, such as is manufactured by Dialog Corporation. In accordance with commands from CPU 102, disk controller 108 controls a magnetic disk drive 110, typically configured of a Model 4004 disk drive, as manufactured by Shugart Corporation. Disk drive 110 contains not only the software for CPU 102, but also serves as a dynamic CPU memory, retaining information concerning the location and status of each of carts 20 illustrated in Fig. 1a.

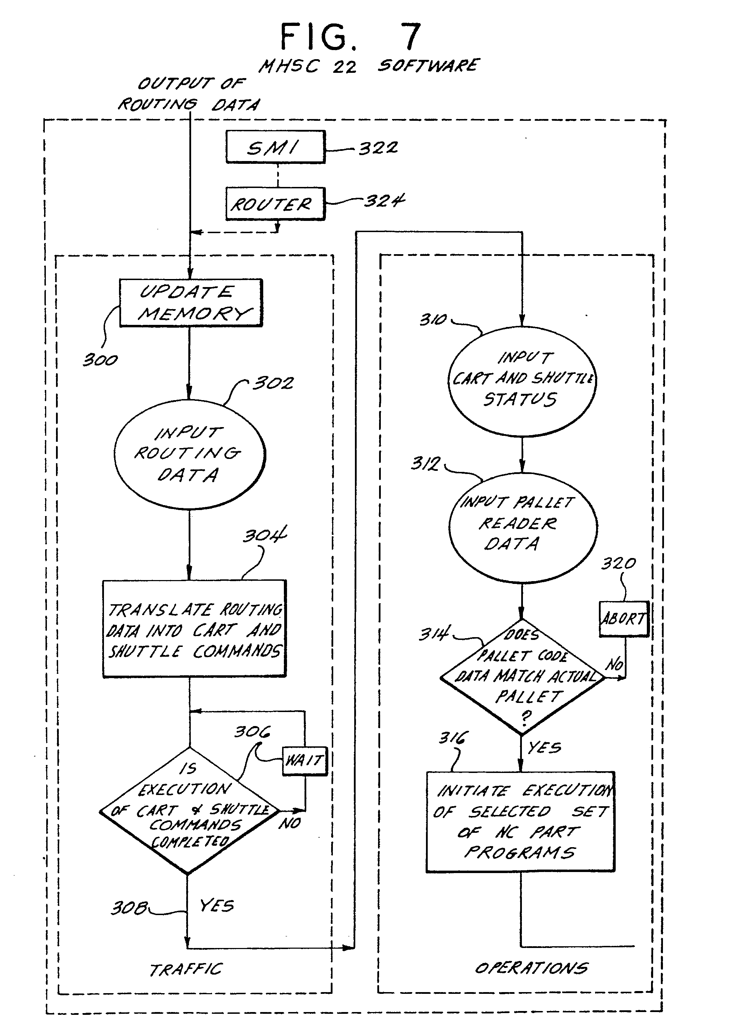

The software for CPU 102 is stored on the magnetic surfaces of disk drive 110 and includes a TRAFFIC program and an OPERATIONS program which are each described in flow chart form with respect to Fig. 7. During execution of the TRAFFIC program by CPU 102, routing data produced by SCCS 38, illustrated in Fig. 1, is translated into cart and shuttle commands which are then supplied to MHLP 96 which translates them into electrical signals which control the operation of the chain drive mechanism and the ramp solenoids, as well as the shuttle assemblies on each CNC machining center. During execution of the OPERATIONS program, CPU determines whether a specific part program is to be executed by the machine control system, and accordingly, commands MHLP 96 to supply machine tool commands to each machine control system to cause execution of a selected one of the part programs stored thereat in accordance with the program map.

In addition to the TRAFFIC and OPERATIONS programs, disk drive 110 also contains a pair of programs, described hereinafter, which are executed by CPU 102 during intervals when SCCS 38 is inoperative. The first of the pair of programs ascertains whether or not operator commands entered through remote data entry and display unit 43, illustrated in Fig. 2, or control data entry and display unit 100 are, in fact, valid commands. The second of the pair of programs translates those valid commands, as determined by the first programs, into routing information which is then translated by the TRAFFIC program into cart and shuttle commands. Should it become necessary to supplement the software stored on disk drive 110, additional software can readily be entered to CPU 102 through magnetic tape cartridge 114 configured identically to tape cartridge 85 of Fig. 3, which is coupled through a serial interface 115a and a switch 115b to multiplexer 104.

MHLP 96 comprises a ladder logic central processing unit (CPU) 116 which is typically configured of the combination of a Kearney & Trecker Model 1-20636 CPU, Model 1-20604 CPU control, Model 1-2061806 memory, and a Model 1-20615001 peripheral interface. Configuring CPU 116 of a ladder logic processor, such as the type manufactured by Kearney & Trecker Corporation, is advantageous as such as a processor permits ready display in ladder logic fashion of transport system conditions, thereby permitting ease of servicing. CPU 116 is coupled both to multiplexer 104 of TCP 94 and control data entry and display unit 100 through a communications multiplexer (CMUX) 118 which is typically configured of a Kearney & Trecker Model 1-2060101 multiplexer. In accordance with shuttle and cart commands supplied by CPU 102 or operator generated cart and shuttle commands entered through remote data entry and display unit 43, illustrated in Fig. 2, or control data entry and display unit 100, CPU 116 produces a set of electrical signals which are supplied through an I/O port 120, typically configured as the combination of a Kearney & Trecker Model 1-2064000 I/O interface board and a Model 1-2065200 driver board, to each machine control system 30, as well as to chain drive mechanism 15b and to the ramp solenoids in track 14 to initiate movement of carts 20 about track 14, both illustrated in Fig. 1, and to initiate operation of the shuttle assembly on each machine to transfer a part carrying pallet from a cart then at the machine tool to the machine tool table. Where the flexible manufacturing system is to include a large number of CNC machining centers, and a large number of carts and load/unload stations that is in excess of the number that can be conventionally controlled by I/O port 120, it may be necessary to add a remote MHSC 121, typically configured of a bus extender, such as manufactured by Kearney & Trecker Corporation, to couple each machine control system of each additional CNC machining center, as well as each additional load/unload station, ramp solenoid and chain drive mechanism to CPU 116.

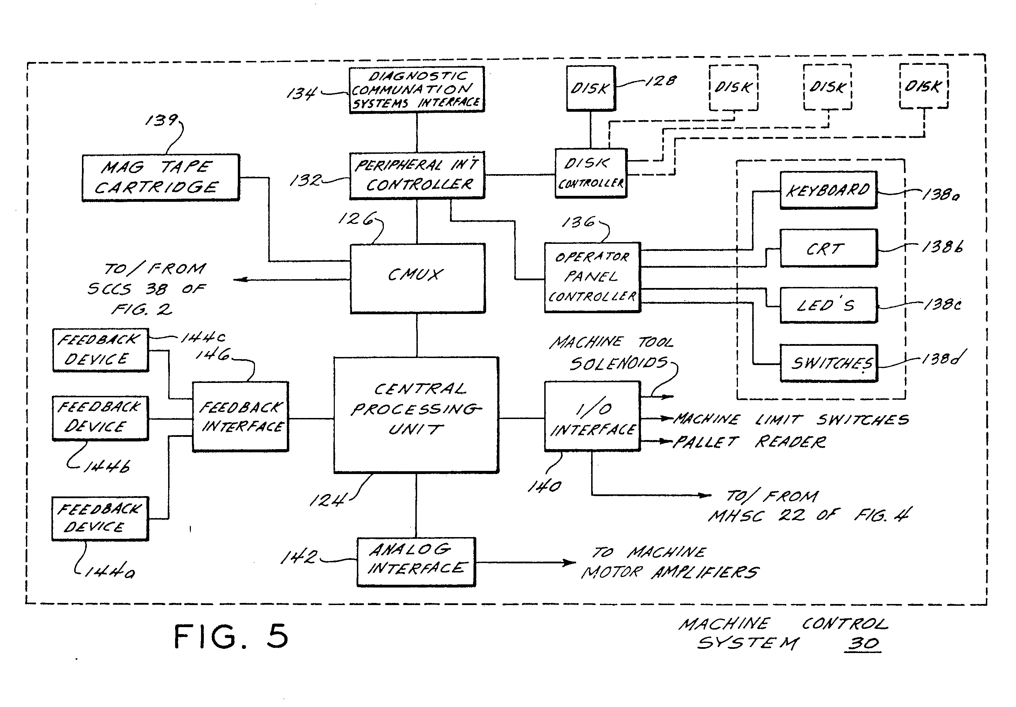

Figure 5 illustrates the details of machine control system 30. In the presently preferred embodiment, machine control system 30 comprises a Kearney & Trecker Model D17 control system which includes a central processing unit (CPU) 124, typically configured substantially identical to CPU 116, illustrated in Fig. 4. CPU 124 is coupled through a communication multiplexer (CMUX) 126, configured identically to CMUX 118, illustrated in Fig. 4, to SCCS 38, illustrated in Fig. 2. The machine NC part programs and program map transmitted by SCCS 38 to machine control system 30 are stored on a magnetic disk 128 controlled by a disk controller 130, such as Kearney & Trecker Model 1-2066880 disk controller, which is further controlled by a peripheral interface controller 132 coupled to CMUX 126. Typically, peripheral interface controller 132 comprises an eight bit microprocessor, such as Motorola Model M6800 microprocessor, which is programmed to control disk controller 130, which in addition to controlling disk 128 can control up to three additional disk drives, each illustrated by dashed lines. In addition, peripheral interface controller 132 couples CMUX 126 to a diagnostic control system interface 134 to allow CPU 124 to interface with a remote diagnostic communication system, such as the type described in U.S. Patent 3,882,305 issued to Richard Johnstone and assigned to the assignee of the present invention. CMUX 126 also couples CPU 124 to an operator panel controller 136 which is controlled by peripheral interface controller 132. Operator panel controller 136 controls a keyboard 138a a CRT 138b, LED indicators 138c and switches 138d, all located on the front surface of the machine control system enclosure. It is through CRT 138b and LED indicators 138c that information is displayed to the machine operator, while keyboard 138a and switches 138d serve to transmit operator commands to CPU 124 to regulate machine operation during intervals when both SCCS 38 and MHSC 22, illustrated in Fig. 2, are inoperative. It may be desirable to couple a magnetic tape cartridge unit 139 to CMUX 126. This permits transmission of NC part programs and program maps stored on mylar tape to CPU 124.

During normal operation, CPU 124 is supplied from MHSC 22 via an I/O interface 140, configured identically to I/O interface 120 in Fig. 4, with information indicating the arrival of a part at the machine. CPU 124 first causes shuttling of the part to the machine table then employs the part program map to select a set of NC part programs in accordance with the pallet code, as determined from pallet reader data. CPU 124 then advises MHSC 22 of its intention to exexute the selected set of machine NC part programs. If the pallet code read by the pallet reader corresponds with the code of the actual pallet on the machine table, as determined by MHSC 22 from routing data provided thereto from SCCS 38, then MHSC 22 supplies CPU 124, via I/O interface 136, with a confirm signal causing CPU 124 to execute the selected set of machine NC part programs. If the pallet actually on the machine differs from the pallet CPU 124 computed to be on the machine, then MHSC 22 transmits an abort signal to CPU 124 to prevent execution of the selected set of NC part programs.

While CPU 124 is executing the selected one of a set of part programs, it generates control commands which are converted by I/O interface 140 into electrical signals supplied to machine and shuttle solenoids and to the machine limit switches. Motor drive commands generated by CPU 124 during part program execution are converted by an analog interface 142 into electrical signals supplied to one of appropriate motor drive amplifiers which control the machine motors that drive the spindle and machine table. Feedback information indicative of the angular position of machine tool spindle and table motors is provided to CPU 124 from a set of feedback devices 144a, 144b and 144c, which are coupled to CPU 124 by a feedback interface system 146. Typically, each of feedback device 144a, 144b and 144c is comprised of a resolver which is excited by analog interface 142 through feedback interface 146.

During machine control system operation, CPU 124 records information concerning machine tool parameters, such as cumulative cutting tool use, machine cycle time, and machine usage, to name a few. This information concerning machine parameters is transmitted, upon demand of SCCS 38, from CPU 124 through CMUX 126 to SCCS 38, which then displays this information to an operator.

Operation of flexible manufacturing system 10 will now be set forth by reference to Figs. 6 and 7, which illustrate, in flow chart form, the software executed by SCCS 38, illustrated in Fig. 3, and by MHSC 22, illustrated in Fig. 4, respectively.

Referring to Fig. 6, at the outset of flexible manufacturing system operation, CPU 66 of SCCS 38 commences execution of the system manager interface (SMI) programs (STEP 200) by first receiving input data consisting of operator commands and data files which may contain routes, machine NC part programs and manual procedures, that is to say, machine tool requirements, machine cycle time requirements, as well as material inventory and production requirements, this input data being entered to CPU through one or more of terminals 80, 88 and 90, as well as tape drive 72, all illustrated in Fig. 3. Upon entry of the data files and commands, CPU 66 then ascertains whether the information inputted thereto is a data file or a command (STEP 202). If the input information is a data file it is then stored (STEP 204), typically on one of disks 68a and 68b, illustrated in Fig. 3, for retention within SCCS 38, or in the event that the input information is a set of machine NC part programs or program maps, for subsequent transmission (STEP 206) to each of machine control systems 30, illustrated in Fig. 5. Note, that if editing of one or more of the sets of machine NC part programs inputted to SCCS 38 is desired, then such editing is usually commenced at SCCS 38 prior to transmission of the NC part program to one of the machine control systems 30. Editing of machine NC part programs at SCCS 38 prior to the transmission thereof to the machine control system is advantageous as it insures uninterrupted NC part program execution by the machine control system in contrast to prior art interactive editing which required interruption of machine part program execution. If desired, an NC part program can also be edited at a machine even as the machine is running a different NC part program.

Should the input information to SCCS 38 be a command, then CPU 66 of SCCS 38 determines whether or not the entered command is valid (STEP 208), that is, whether or not the entered command is one of possible SCCS commands. If the command is invalid, then an invalid command message is displayed to the SCCS system operator (STEP 210). Valid SCCS commands encountered by the CPU 66 are then translated into production data (STEP 212), tooling data, program data report requests, as well as routing data, indicative of the desired path of materials which is then subsequently acted upon by the scheduler program.

Following the translation of input information into route information, CPU 66 then executes the scheduler program (SCHED), by first checking (STEP 214) the type, number and location of carts and fixtures, fixtures being those structures which hold one or more parts to a pallet, as well as the quantity of materials, that is, unfinished parts, available for machining. Once the status of carts, fixtures and materials is ascertained, CPU 66 then ascertains (STEP 216) whether the requisite number of carts, fixtures and materials are available for the desired routing path previously selected during execution of the SMI program. If the requisite number of carts, fixtures and materials are not available (STEP 218), then an invalid route message is displayed to the operator. When a sufficient number of carts, fixtures and materials are available for the new route, then CPU 66 initiates (STEP 220) execution of the desired route by commencing execution of the ROUTER program.

At the outset of execution of the ROUTER program, CPU 66 causes MHSC 22 to check transport system status (STEP 222), that is, CPU 66 commands MHSC 22 to determine the most recent location and status of each of the carts 20 and each of the shuttle assemblies 32 illustrated in Fig. 1. Thereafter, the present status of carts and shuttles is displayed (STEP 224) to allow the operator to enter any changes as may be necessary. Following the display of cart and shuttle status, CPU 66 then checks the new route against presently active routes to determine whether or not any conflicts may be present (STEP 226). If execution of the new route is likely to result in a conflict with any of the presently active routes, then an invalid route message is displayed to the operator (STEP 228), requiring selection of a new route. If the new route presents no conflict with presently active routes, then routing data, corresponding to the new route, is supplied to MHSC 22 (STEP 230) which, in response, initiates execution of the MHSC software.

Following an output of routing data to MHSC 22 of Fig. 4, CPU 102 of MHSC 22 commences execution of the programs TRAFFIC and OPERATIONS, which are each illustrated in flow chart form in Fig. 7. At the outset of TRAFFIC program execution by CPU 102, the memory of CPU 102 is updated (STEP 300), that is to say, the most recent location and status of carts 20 and shuttle assemblies 32 is entered in memory. Following updating of its memory, CPU 102 receives input routing data from SCCS 38 (STEP 302) and translates the routing data supplied from SCCS 38 into cart and shuttle commands (STEP 304) which, in turn, are transmitted by CPU 102 through multiplexer 104, illustrated in Fig. 4, to MHLP 96, illustrated in Fig. 4, which controls the movement of carts 20 and shuttle assemblies 32, both illustrated in Fig. 1, accordingly. After cart and shuttle commands are supplied by CPU 102 to MHLP 96, CPU 102 waits until MHLP 96 has completed (STEP 306) execution of the cart and shuttle commands prior to input of such commands to the OPERATION program (STEP 308).

The OPERATIONS program is active continuously and monitors the status of the shuttle assembly 32 on each machine tool. Following translation of cart and shuttle command, cart and shuttle status is determined (STEP 310). Next, as a part carrying pallet is shuttled from a cart to the machine table, the pallet reader reads the code on the pallet and the pallet reader data is then transmitted to CPU 102, illustrated in Fig. 4 (STEP 312). CPU 102 then determines whether or not the pallet on the machine table, as determined from the pallet code read by the pallet reader, corresponds to the pallet which was actually delivered, as determined from routing data supplied to CPU 102 by SCCS 38 (STEP 314). Since each machine control system 30, illustrated in Fig. 5, selects the set of NC part programs it executes, in accordance with the part program map, from the pallet code data produced by the pallet reader it is necessary to verify the identity of the pallet on the machine since the pallet reader does not always correctly read the pallet code. If the pallet code of the pallet on the machine table, as determined by the pallet reader, corresponds to the code of the pallet actually delivered to the machine, then CPU 102 transmits a confirm signal to machine control system 30 (STEP 316) which then initiates execution of a selected set of machine NC part programs corresponding to the pallet code read by the pallet reader in accordance with the program map (STEP 318). Otherwise, if the pallet code does not correspond, then CPU 102 sends an abort signal (STEP 320), inhibiting machine control system 30 from initiating part program execution. In this way, execution of an improper set of part programs is prevented, thereby avoiding damage to N/C machine tool 28, illustrated in Fig. 1.

Two additional programs SMI (STEP 322) and ROUTER (STEP 324), identical to the SMI and ROUTER programs, respectively, described with respect to Fig. 6, are also resident in MHSC 22. During intervals, when SCCS 38 is inoperative, the MHSC resident SMI and ROUTER programs are executed by CPU 102 prior to execution of the TRAFFIC program. Input routing data, formerly provided by SCCS 38, is now supplied to CPU 102 by an operator through control data entry and display unit 100, illustrated in Fig. 4, or remote data entry and display unit 43, illustrated in Fig. 1, or in accordance with operator entered routing data previously stored on disk drive 110, illustrated in Fig. 4. This mode of flexible manufacturing system operation, characterized as the semi-automatic operating mode, allows continued production of machined parts under operator control despite the fact SCCS is inoperative. As previously indicated, manual operation of the flexible manufacturing system can readily be accomplished by entering shuttle and cart commands directly to MHLP 96 from control data entry and display unit 100 or remote data entry and display unit 43, and by entering machine tool commands entered directly to machine control system 30 by an operator.

The foregoing describes an improved flexible manufacturing system having distributed data processing capability which allows semi-automatic and manual operation during intervals when one of the data processing systems is inoperative. By employing distributed data processing, the flexible manufacturing system of the present invention is capable of controlling an infinite number of machine tools.

While only certain preferred features of the invention have been shown by way of illustration, many modifications and changes will occur to those skilled in the art.

## Claims

1. A flexible manufacturing system (10) capable of automated production of machined parts, said system comprising a plurality of computer numerically controlled machining centers (26);

   a transport system (14, 15a, 15b, 20) having at least one load/unload station (24) where unfinished parts are entered and finished parts are discharged, said transport system moving parts from each said load/unload station (24) to said computer numerically controlled machining centers (26) in accordance with electrical signals supplied to said transport system (14, 15a, 15b, 20) and said transport system generating data indicative of the part location during part movement;

   at least one data entry and display unit (42) located in proximity with a respective one of said load/unload stations (24) for transmitting data entered thereto by an operator indicative of the part type entered at said respective one of said load/unload stations (24);

   a supervisory control computer system (38) coupled to each of said computer numerically controlled machining centers (26); and coupled to each said data entry and display unit (42) for processing data therefrom to generate routing data indicative of the desired path of parts from said load/unload station (24) to said computer numerically controlled machining centers (26);

   **characterized in that**

   a material handling system controller (22) is coupled to said supervisory control computer system (38) to receive said routing data therefrom, said material handling system controller (22) being coupled to said transport system (14, 15a, 15b, 20) for supplying said transport system with said electrical signals to cause movement of parts in accordance with said routing data; and that in the absence of said routing data from said supervisory control computer system (38) the movement of parts is carried out in accordance with manually entered routing data and manually entered transport system commands to said handling system controller (22);

   said material handling system controller 22 is coupled to each said computer numerically controlled machining center (26), and in accordance with said data generated by said transport system indicative of part location, said material handling system controller (22) supplies said machine tool commands to said numerically controlled machining centers (26);

   and in that said plurality of computer numerically controlled machining centers (26) are each provided by the supervisory control computer system (38) with a plurality of sets of machine NC part programs and a program map, each said computer numerically controlled machining center (26) executing a selected one of said sets of machine NC part programs in accordance with said program map in response to said machine tool commands and in the absence of machine tool commands, in response to operator entered machine tool commands.

2. The system according to claim 1, wherein said supervisory control computer system (38) comprises line adaptors for receiving input data, supervisory control computer system instructions and sets of machine NC part programs and program maps memory means (72) for retaining said input data, said supervisory control computer system instructions and said machine part programs and program maps for retaining data transmitted thereto indicative of system status; electronic processing means (66, 86) coupled to said line adaptors and to said memory means (72) to receive said input data, said supervisory control computer system instructions and said sets of machine NC part programs and program maps therefrom, said electronic processing means executing said supervisory control computer system instructions, and in accordance with electronic logic means transmitting said sets of machine NC part programs and program maps to said computer numerically controlled machining centers (26) and said electronic processing means (66, 86) processing said input data together with said data from said data entry and display units (42) to produce said routing data and said data indicative of system conditions which is transmitted to said memory means (72) and said input/output means.

3. The system according to claim 2 wherein said electronic processing means comprises a central processing unit (66) and a multiplexer (86) for coupling said central processing unit to said input/output means, to said material handling system controller, and to said plurality computer numerically controlled machining centers (26).

4. The system according to claim 3, further including means coupled between said multiplexer and said material handling system controller for reducing the degradation of signals transmitted therebetween; means coupled between said multiplexer and each of said computer numerically controlled machining systems for reducing the degradation of signals transmitted therebetween; means coupled between said multiplexer means and said data entry and display unit for reducing the degradation of signals transmitted therebetween.

5. The system according to claim 1 wherein said material handling system controller comprises a control data entry and display unit (100) for transmitting said manually entered routing commands and said manually entered transport system commands; a traffic control processor (94) coupled to said supervisory control computer system (38) and to said control data entry and display unit (100), said traffic control processor (94) translating said routing data generated by said supervisory control computer system (38) into transport system commands, and in the absence of said routing data, said traffic control processor (94) translating manually entered routing commands into said transport system commands; and a material handling logic processor (96) coupled to said traffic control processor (94), said control data entry and display unit (100) and to said transport system, said material handling logic processor (96) supplying said transport system with said electrical signals in accordance with said transport system commands supplied by said traffic control processor (94), and in the absence of said transport system commands, in accordance with said manually entered transport system commands transmitted thereto from said control data entry and display unit (100).

6. The system according to claim 5, further including a remote unit (43) coupled to said traffic control processor (94) and said material handling logic processor (96) for transmitting said manually entered routing data to said traffic control processor (94) and for transmitting said manually entered transport system commands to said material handling logic processor (96).

7. The system according to claim 5, further including storage means (110) coupled to said traffic control processor (94) for storing manually entered routing data and manually entered transport system commands and for transmitting said stored manually entered routing data and said stored manually entered transport commands to said traffic control processor (94).

8. The system according to claim 5, wherein said traffic control processor (94) comprises memory means (110) containing a set of program instructions for translating said routing data into said transport system commands and for translating said manually entered routing commands into said transport system commands; and electronic processing means coupled to said supervisory control computer system (38) to receive said routing data therefrom, and coupled to said control data entry and display unit (100) to receive said manually entered routing data therefrom; said electronic processing means coupled to said memory means (110) and to said material handling logic processor (96) for executing said set of program instructions to supply said material handling logic processor with said transport system commands in accordance with said routing data received from said supervisory control computer system; and in the absence of said routing data, in accordance with said manually entered routing commands from said control set.

9. The system according to claim 8, wherein said electronic processing means comprises a central processing unit (102) for executing said set of program instructions stored at said memory means (68a, 68b); a multiplexer (104) for coupling said central processing unit(102) to said material handling logic processor (96) and to said control data entry and display unit; and an input/output port for coupling said multiplexer (104) to said supervisory control computer system (38).

10. The system according to claim 5, wherein said material handling logic processor comprises a communications multiplexer (104) coupled to said control data entry and display unit (100) and said traffic control processor (94) for multiplexing said transport system commands and said manually entered transport system commands; a central processing unit (102) coupled to said communications multiplexer (104) for translating said transport system commands from said traffic control processor (94) into said electrical signals for controlling said transport system, and in the absence of said transport system commands, said central processing unit (102) translates said manually entered transport system commands into said electrical signals to control said transport system; and an interface for coupling said central processing means to said transport system.

11. The system according to claim 1, wherein said transport system includes a track (14) juxtaposed to each of said computer numerically controlled machine centers (26) and said load/unload stations (24); a plurality of carts (20) movable along said track for parts from said load/unload station to said computer numerically controlled machining centers (26); means (15a) disposed in said track (14) for moving said carts (20) along said track in accordance with said electrical signals; and a plurality of shuttle assemblies (32) with at least one of said shuttle assemblies situated between said track and a respective one of said computer numerically controlled machining centers for shuttling a part from a predetermined one of said carts (20) to a corresponding one of said machine centers (26) in accordance with said electrical signals.

12. The system according to claim 1, wherein each of said computer numerically controlled machining centers (26) comprises a numerically controlled machine tool (28); and a machine control system (30) coupled to said numerically controlled machine, said machine control system (30) coupled to said supervisory control computer system (38) to receive said plurality of sets of machine NC part programs and said program map therefrom, said machine control system (30) coupled to said material handling system controller (22) for receiving machine tool commands therefrom and for executing a selected one of sets of machine NC part programs in accordance with said program map responsive to machine tool commands, and in the absence of said machine tool commands, responsive to operator entered commands.

13. The system according to claim 12, wherein said machine control system (30) comprises input/output means for receiving said operator entered machine commands and for displaying data indicative of machine tool operator; memory means (128) for storing said selected sets of machine NC part programs and said program map transmitted from said supervisory control computer system (38); central processing unit (124) for executing said selected one of said set of machine NC part programs in accordance with said program map in response to said machine tool commands, and in the absence of machine tool commands in response to said operator entered commands, to direct the operation of said machine tool in accordance with machine tool feedback data; a communications multiplexer (126) for coupling said central processing unit (124) to said supervisory control computer system (38), to said memory means (128), and to said input/output means; interface means (146) for coupling said central processing units (124) to said material handling system controller (22) and to said machine center (26); and a feedback system (144 a, b, c) coupled to said machine tool for supplying said central processing system machine tool feedback data.

14. The system according to claim 13, in which the machine control system includes a diagnostic control system interface (134) for coupling said central processing unit (124) to a diagnostic communication system.

15. The system according to any preceding claim and in which during execution of said selected one of said sets of machine NC part programs, each said computer numerically controlled machining center (26) generates data indicative of machine tool operation including cumulative cutting tool usage; and output means coupled to said supervisory control system transmits information indicative of said cumulative cutting tool usage.

16. The system according to claim 15, wherein said output means comprises a printer (54).

**Revendications**

1. Système de fabrication flexible (10) permettant la production automatisée de pièces usinées, ce système comprenant plusieurs machines universelles d'usinage à commande numérique par ordinateur (26),

   un système de transport (14, 15a, 15b, 20) comportant au moins un poste de chargement/déchargement (24) auquel des pièces non-finies sont introduites et des pièces finies sont extraites, ce système de transport déplaçant des pièces de chaque poste de chargement/déchargement (24) aux, machines universelles d'usinage à commande numérique par ordinateur (26) en fonction de signaux électriques fournis au système de transport (14, 15a, 15b, 20) et ce système de transport produisant des données indiquant l'emplacement des pièces durant le déplacement de celles-ci,

   au moins une unité d'introduction et de visualisation de données (42) située à proximité de l'un, correspondant, des postes de chargement/déchargement (24) et servant à transmettre des données qui y sont introduites par un opérateur et qui indiquent le type des pièces qui est introduit au poste de chargement/déchargement (24) considéré,

   un ordinateur de commande centrale (38) relié à chacune des machines universelles d'usinage à commande numérique par ordinateur (26) et relié à chacune des unités d'introduction et le visualisation de données (42) en vue de traiter des données provenant de celles-ci de façon à produire des données d'acheminement indiquant le trajet voulu pour des pièces, dudit poste de chargement/déchargement (24) aux machines universelles d'usinage à commande numérique par ordinateur (26),

   caractérisé en ce que :

   une unité de commande de système de manutention de produits (22) est reliée à l'ordinateur de commande centrale (38) en vue de recevoir de celui-ci lesdites données d'acheminement, cette unité de commande de système de manutention de produits (22) étant reliée au système de transport (14, 15a, 15b, 20) en vue de fournir à ce système de transport lesdits signaux electriques en vue de provoquer un déplacement des pièces en fonction desdites données de déplacement des pièces, tandis qu'en l'absence de données d'acheminement provenant de l'ordinateur de commande centrale (38), l'acheminement est exécuté sous l'influence d'ordres d'acheminement introduits manuellement et d'ordres de système, de transport introduits manuellement envoyés à l'unité de commande de système de manutention (22),

   en ce que l'unité de commande de système de manutention de produits (22) est reliée à chacune des machines universelles d'usinage à commande numérique par ordinateur (26) et, en fonction des donnécs produites par le système de transport qui indiquent un emplacement de pièce, cette unité de commande de système de manutention de produits (22) envoie lesdits ordres pour machine-outil aux machines universelles d'usinage à commande numérique (26)

   et en ce que les multiples machines universelles d'usinage à commande numérique par ordinateur (22) sont pourvues chacune, par l'ordinateur de commande centrale (38), de plusieurs groupes de programmes de pièces en commande numérique machine et d'un plan de programmes, chacune des machines universelles d'usinage à commande numérique par ordinateur (26) exécutant l'un, sélectionné, desdits groupes de programmes de pièces en commande numérique machine en conformité avec le plan de programmes et sous l'influence desdits ordres pour machine-outil et, en l'absence d'ordres pour machine-outil, sous l'influence d'ordres pour machine-outil introduits par un opérateur.

2. Système suivant la revendication 1, dans lequel l'ordinateur de commande central (38) comprend des adaptateurs de ligne, destinés à recevoir des données d'entrée, des instructions de l'ordinateur de commande centrale et des groupes de programmes de pièces en commande numérique machine et plans de programmes, une mémoire (72), destinéc à conserver ces données d'entrée, ces instructions de l'ordinateur de commande centrale (38) et ces programmes de pièces en commande numérique machine et plans de programmes en vue de conserver des données, qui lui sont transmises, indiquant l'état du système, des moyens de traitement électronique (66, 86) reliés à ces adaptateurs de ligne et à cette mémoire (72) en vue d'en recevoir ces données d'entrée, ces instructions de l'ordinateur de commande centrale (38) et ces groupes de programmes de pièces en commande numérique machine et plans de programmes, ces moyens de traitement électronique (66, 86) exécutant lesdites instructions de l'ordinateur de commande centrale (38) et transmettant, sous l'influence de moyens logiques électroniques, lesdits groupes de programmes de pièces en commande numérique machine et plans de programmes aux machines universelles d'usinage à commande numérique par ordinateur (26), tandis que les moyens de traitement électronique (66, 86) traitent les données d'entrée en même temps que les données provenant des unités d'introduction et de visualisation de données (42) de façon à produire les données d'acheminement et les données indiquant les conditions du système, qui sont transmises à la mémoire (72) et aux adaptateurs de ligne.

3. Système suivant la revendication 2, dans lequel les moyens de traitement électronique comprennent une unité centrale (66) et un multiplexeur (86) servant à relier cette unité centrale aux adaptateurs de ligne, à l'unité de commande de système de manutention de produits et aux multiples machines universelles d'usinage à commande numérique par ordinateur (26).

4. Système suivant la revendication 3, comprenant en outre des moyens branchés entre le multiplexeur et l'unité de commande de système de manutention de produits et servant à réduire la dégradation des signaux transmis entre ceux-ci, des moyens branchés entre le multiplexeur et chacune des machines universelles d'usinage à commande numérique par ordinateur et servant à réduire la dégradation des signaux transmis entre ceux-ci, et des moyens branchés entre le multiplexeur et l'unité d'introduction et de visualisation de données, et servant à réduire la dégradation des signaux transmis entre ceux-ci.

5. Système suivant la revendication 1, dans lequel l'unité de commande de système de manutention de produits (22) comprend une unité d'introduction et de visualisation de données de commande (100), servant à transmettre les ordres d'acheminement introduits manuellement et les ordres de système de transport introduits manuellement, un processeur de commande de circulation (94) relié à l'ordinateur de commande centrale (38) et à l'unité d'introduction et de visualisation de données de commande (100), ce processeur de commande de circulation (94) transformant les données d'acheminement produites par l'ordinateur de commande centrale (38) en ordres pour système de transport, tandis qu'en l'absence desdites données d'acheminement, ce processeur de commande de circulation (94) transforme les ordres, d'acheminement introduits manuellement de façon à donner lesdits ordres pour système de transport, et un processeur logique, de manutention de produits (96) relié au processeur de commande de circulation (94), à l'unité d'introduction et de visualisation de données de commande (100) et au système de transport, ce processeur logique de manutention de produits (96) envoyant au système de transport lesdits signaux électriques sous l'influence des ordres pour système de transport fournis par le processeur de commande de circulation (94) et, en l'absence de ces ordres pour système de transport, sous l'influence des ordres de système de transport introduits manuellement qui lui sont transmis à partir de l'unité d'introduction et de visualisation de données de commande (100).

6. Système suivant la revendication 5, comprenant en outre un terminal (43) relié au processeur de commande de circulation (94) et au processeur logique de manutention de produits (96) et servant à transmettre lesdits ordres d'acheminement introduits manuellement à ce processeur de commande de circulation (94) et à transmettre lesdits ordres de système de transport introduits manuellement à ce processeur logique de manutention de produits (96).

7. Système suivant la revendication 5, comprenant en outre des moyens de mise en mémoire (110) reliés au processeur de commande de circulation (94) et servant à ranger des ordres d'acheminement introduits manuellement et des ordres de système de transport introduits manuellement et à transmettre les ordres d'acheminement introduits manuellement et se trouvant en mémoire et les ordres de système de transport introduits manuellement et se trouvant en mémoire à ce processeur de commande de circulation (94).

8. Sytème suivant la revendication 5, dans lequel le processeur de commande de circulation (94) comprend une mémoire (110), contenant un groupe d'instructions de programme servant à transformer lesdites données d'acheminement de façon à donner des ordres pour système de transport du type considéré et à transformer les ordres d'acheminement introduits manuellement de façon à donne des ordres pour système de transport du type considéré, et des moyens de traitement électronique reliés à l'ordinateur de commande centrale (38) de façon à en recevoir les données d'acheminement et reliés à l'unité d'introduction et de visualisation de données de commande (100) de façon à en recevoir les ordres d'acheminement introduits manuellement, ces moyens de traitement électronique étant reliés à la mémoire (110) et au processeur logique de manutention de produits (96) de façon à exécuter ledit groupe d'instructions de programme en vue d'envoyer à ce processeur logique de manutention de produits les ordres pour système de transport sous l'influence des données d'acheminement reçues à partir de l'ordinateur de commande contrale et, en l'absence de ces données d'acheminement, sous l'influence des ordres d'acheminement introduits manuellement provenant dudit groupe de commande.

9. Système suivant la revendication 8, dans lequel les moyens de traitement électronique comprennent une unité centrale (102), servant à exécuter le groupe d'instructions de programme rangé dans la mémoire (68a, 68b), un multiplexeur (104), servant à coupler cette unité centrale (102) au processeur logique de manutention de produits (96) et à l'unité d'introduction et de visualisation de données de commande, et un port d'entrées/sorties servant à coupler ce multiplexeur (104) à l'ordinateur de commande centrale (38).

10. Système suivant la revendication 5, dans lequel le processeur logique de manutention de produits comprend un multiplexeur de communications (104), relié à l'unité d'introduction et de visualisation de données de commande (100) et au processeur de commande de circulation (94) et servant à réaliser le multiplexage des ordres pour système de transport et des ordres de système de transport introduits manuellement, une unité centrale (102), reliée à ce multiplexeur de communications (104) et servant à transformer les ordres pour système de transport provenant du processeur de commande de circulation (94) de façon à former les signaux électriques servant à commander le système de transport, tandis qu'en l'absence des ordres pour système de transport, l'unité centrale (102) transforme les ordres de système de transport introduits manuellement de façon à former lesdits signaux électriques servant à commander le système de transport, et une interface servant à coupler cette unité centrale à ce système de transport.

11. Système suivant la revendication 1, dans lequel le système de transport comprend une voie (14), juxtaposée à chacune des machines universelles d'usinage à commande numérique par ordinateur (26) et à chacun des postes de chargement/déchargement (24), de multiples chariots (20), agencés de façon à pouvoir se déplacer le long de cette voie en vue de transporter des pièces des postes de chargement/déchargement aux machines universelles d'usinage à commande numérique par ordinateur (26), des moyens (15a) disposés dans le voie (14), qui servent à déplacer ces chariots (20), le long de cette voie sous l'influence desdits signaux électriques, et plusieurs ensembles-navettes (32), au moins l'un de ces ensembles-navettes étant situé entre la voie et l'une, associée, des machines universelles d'usinage à commande numérique par ordinateur en vue de faire faire la navette à une pièce entre l'un, fixé à l'avance, des chariots (20) et l'une, correspondante, des machines universelles d'usinage (26), sous l'influence desdits signaux électriques.

12. Système suivant la revendication 1, dans lequel chacune des machines universelles d'usinage à commande numérique par ordinateur (26) comprend une machine-outil à commande numérique (28) et un système de commande de machine (30) relié à cette machine à commande numérique, ce système de commande de machine (30) étant relié à l'ordinateur de commande centrale (38), de façon à recevoir de celui-ci les multiples groupes de programmes de pièces en commande numérique machine et le plan de programmes, et relié à l'unité de commande de système de manutention de produits (22) de façon à recevoir de celle-ci des ordres pour machine-outil et à exécuter l'un, sélectionné, des groupes de programmes de pièces en commande numérique machine en conformité avec le plan de programmes et sous l'influence des ordres pour machine-outil et, en l'absence de ces ordres pour machine-outil, sous l'influence d'ordres introduite par un opérateur.

13. Système suivant la revendication 12, dans lequel le système de commande de machine (30) comprend des moyens d'entrée/sortie, servant à recevoir les ordres machine introduits par un opérateur et à visualiser des données désignant l'opérateur de la machine-outil, une mémoire (128), servant à ranger les groupes sélectionnés de programmes de pièces en commande numérique machine et le plan de programmes qui sont transmis à partir de l'ordinateur de commande centrale (38), une unité centrale (124), servant à exécuter l'un sélectionné, des groupes de programmes de pièces en commande numérique machine en conformité avec le plan de programmes et sous l'influence des ordres pour machine outil et, en l'absence de tels ordres pour machine-outil, sous l'influence desdits ordres introduits par un opérateur, de façon à diriger le fonctionnement de la machine-outil en fonction de données d'asservissement de la machine-outil, un multiplexeur de communications (126), servant à coupler cette unité centrale (124) à l'ordinateur de commande centrale (38), à la mémoire (128) et aux moyens d'entrée/sortie, une interface (146) servant à coupler l'unité centrale (124) à l'unité de commande de système de manutention de produtis (22) et à la machine universelle d'usinage (26), et un système d'asservissement (144a, b, c) relié à la machine-outil en vue de fournir lesdites données d'asservissement de machine-outil à l'unité centrale.

**14.** Système suivant la revendication 13, dans lequel le système central de machines comprend une interface de système de commande de diagnostic (134) permettant de coupler l'unité centrale (124) à un système de communications de diagnostic.

**15.** Système suivant l'une quelconque des revendications précédentes, dans lequel, durant l'exécution de l'un sélectionné, des groupes de programmes de pièces en commande numérique machine, chacune des machines universelles d'usinage à commande numérique par ordinateur (26) produit des données fournissant des indications sur le fonctionnement de la machine-outil, parmi lesquelles un usage cumulatif d'outils de coupe, et en ce que des moyens de sortie reliés à l'ordinateur de commande centrale (38) transmettent des informations fournissant des indications sur ledit usage cumulatif d'outils de coupe.

**16.** Système suivant la revendication 15, dans lequel les moyens de sortie consistent en une imprimante (54).

## Ansprüche

**1.** Flexibles Herstellungssystem (10), das zur automatisierten Herstellung von maschinell bearbeiteten Teilen befähigt ist und eine Mehrzahl von numerisch computergesteuerten Bearbeitungszentren (26) besitzt;

ferner ein Transportsystem (14, 15a, 15b, 20), das mindestens eine Be- und Entladestation (24) besitzt, denen unfertige Teile aufgegeben und fertige Teile entnommen werden, wobei das Transportsystem von jeder der Be- und Entladestationen (24) auf Grund von dem Transportsystem (14, 15a, 15b, 20) zugeführten elektrischen Signalen Teile zu den numerisch computergesteuerten Bearbeitungszentren (26) bewegt und das Transportsystem den Ort des Teils während seiner Bewegung angebende Daten generiert;

mindestens eine in der Nähe einer der Be- und Entladestationen (24) angeordnete Dateneingabe- und -anzeigeeinheit (42) zum Übertragen von durch eine Bedienungsperson in diese Einheit eingegebenen und den Typ des an der zugeordneten Be- und Entladestation (24) aufgegebenen Teils angebenden Daten überträgt;

ein zur Überwachung und Steuerung dienendes Computersystem (38), das an jedes der numerisch computergesteuerten Bearbeitungszentren (26) und mit jeder der Dateneingabe-und anzeigeeinheiten (42) gekoppelt ist und dazu dient, durch Verarbeitung der von dort empfangenen Daten Wegbestimmungsdaten zu generieren, die den für Teile gewünschten Weg von den Be- und Entladestationen (24) zu den numerisch computergesteuerten Bearbeitungszentren (26) angeben;

dadurch gekennzeichnet, daß

mit dem zur Überwachung und Steuerung dienenden Computersystem (38) ein Materialfluß-Steuergerät (22) gekoppelt ist, das von dem zur Überwachung und Steuerung dienenden Computersystem die Wegebestimmungsdaten empfängt und das mit dem Transportsystem (14, 15a, 15b, 20) gekoppelt ist und an dieses die genannten elektrischen Signale abgibt, um eine Bewegung von Teilen entsprechend den genannten Teilebewegungsdaten zu bewirken; und daß bei einem Nichtvorliegen der von dem zur Überwachung und Steuerung dienenden Computersystem (38) kommenden genannten Wegebestimmungsdaten die Wegebestimmung auf Grund von manuell in das Materialfluß-Steuergerät (22) eingegebenen Wegebestimmungsdaten und Transportsystembefehlen erfolgt;

wobei das Materialfluß-Steuergerät (22) mit jedem der numerisch computergesteuerten Bearbeitungszentren (26) gekoppelt ist und auf Grund der von dem Transportsystem generierten und den Ort eines Teils angebenden Daten Werkzeugmaschinenbefehle an die numerisch computergesteuerten Bearbeitungszentren (26) abgibt;

und jedes der numerisch computergesteuerten Bearbeitungszentren (26) von dem zur Überwachung und Steuerung dienenden Computersystem (38) mit einer Mehrzahl von Sätzen von Programmen für die numerisch gesteuerte maschinelle Bearbeitung von Teilen und mit einer Programmabbildung versorgt wird und jedes der numerisch computergesteuerten Bearbeitungszentren (26) entsprechend der Programmabbildung auf Grund der genannten Werkzeugmaschinenbefehle und bei Nichtvorliegen von Werkzeugmaschinenbefehlen auf Grund von von der Bedienungsperson eingegebenen Werkzeugmaschinenbefehlen einen aus den Sätzen von Programmen für die numerisch gesteuerte maschinelle Bearbeitung von Teilen ausgewählten Satz entsprechend der Programmabbildung ausführt.

2.  System nach Anspruch 1, dadurch gekennzeichnet, daß das zur Überwachung und Steuerung dienende Computersystem (38) Leitungsadapter für den Empfang von Eingabedaten, von Befehlen für das zur Überwachung und Steuerung dienende Computersystem und von Sätzen von Programmen für die numerisch gesteuerte maschinelle Bearbeitung von Teilen und von Programmabbildungen besitzt; ferner einen Speicher (72) zum Speichern der Eingabedaten, der Befehle für das zur Überwachung und Steuerung dienende Computersystem, der Sätze von Programmen für die maschinelle Bearbeitung von Teilen und der Programmabbildungen und zur zum Speichern von an ihn übertragenen Daten, die den Zustand des Systems angeben; ferner eine mit den Leitungsadaptern und dem Speicher (72) gekoppelte elektronische Verarbeitungseinrichtung (66, 86) für den Empfang der Eingabedaten, der Befehle für das zur Überwachung und Steuerung dienende Computersystem, der Sätze von Programmen für die numerisch gesteuerte maschinelle Bearbeitung von Teilen und der Programmabbildungen, wobei die elektronische Verarbeitungseinrichtung die Befehle für das zur Überwachung und Steuerung dienende Computersystem ausführt und auf Grund einer elektronischen Logik die Sätze von Programmen für die numerisch gesteuerte maschinelle Bearbeitung von Teilen und die Programmabbildungen an die numerisch computergesteuerten Bearbeitungszentren (26) abgibt und die elektronische Verarbeitungseinrichtung (66, 86) die Eingabedaten zusammen mit den von den Dateneingabe- und -anzeigeeinheiten (42) kommenden Daten verarbeitet und dadurch die Wegebestimmungsdaten und die Systemzustände angebenden Daten erzeugt, die zu dem Speicher (72) und der Eingabe-Ausgabeeinrichtung übertragen werden.

3.  System nach Anspruch 2, dadurch gekennzeichnet, daß die elektronische Verarbeitungseinrichtung eine Zentraleinheit (66) und einen Multiplexer (86) besitzt, der zum Koppeln der Zentraleinheit mit der Ein- und Ausgabeeinrichtung mit dem Materialfluß-Steuergerät und mit der Mehrzahl von numerisch computergesteuerten Bearbeitungszentren (26) dient.

4.  System nach Anspruch 3, mit einer zwischen dem Multiplexer und dem Materialfluß-Steuergerät gekoppelten Einrichtung zum Vermindern der Verschlechterung von dazwischen übertragenen Signalen; ferner einer zwischen dem Multiplexer und jedem der numerisch computergesteuerten Bearbeitungszentren gekoppelten Einrichtung zum Vermindern der Verschlechterung von dazwischen übertragenen Signalen; und einer zwischen dem Multiplexer und der Dateneingabe- und -anzeigeeinheit gekoppelten Einrichtung zum Vermindern der Verschlechterung von dazwischen übertragenen Signalen.

5.  System nach Anspruch 1, dadurch gekennzeichnet, daß das Materialfluß-Steuergerät eine Steuerdateneingabe- und -anzeigeeinheit (100) zum Übertragen der manuell eingegebenen Wegebestimmungsbefehle und der manuell eingegebenen Transportsystembefehle besitzt; ferner einen verkehrssteuernden Prozessor (94), der mit dem zur Überwachung und Steuerung dienenden Computersystem (38) und der Steuerdateneingabe- und -anzeigeeinheit (100) gekoppelt ist und der die von dem zur Überwachung und Steuerung dienenden Computersystem (38) generierten Wegebestimmungsdaten und bei einem Nichtvorliegen der genannten Wegebestimmungsdaten manuell eingegebene Wegebestimmungsbefehle in Transportsystembefehle umsetzt; sowie einen Materialflußlogikprozessor (96), der mit dem verkehrssteuernden Prozessor (94), der Steuerdateneingabe- und -anzeigeeinheit (100) und dem Transportsystem gekoppelt ist und der auf Grund der an ihn von dem verkehrsteuernden Prozessor (94) abgegebenen Transportsystembefehle und bei einem Nichtvorliegen der genannten Transportsystembefehle auf Grund der an ihn von der Steuerdateneingabe- und -anzeigeeinheit (100) abgegebenen, manuell eingegebenen Transportsystembefehle die genannten elektrischen Signale an das Transportsystem abgibt.

6. System nach Anspruch 5 mit einer mit dem verkehrssteuernden Prozessor (94) und dem Materialflußlogikprozessor (96) gekoppelten Fernbedienungseinheit (43) zur Abgabe von manuell eingegebenen Wegebestimmungsdaten an den verkehrssteuernden Prozessor (94) und zur Abgabe von manuell eingegebenen Transportsystembefehlen an den Materialflußlogikprozessor (96).

7. System nach Anspruch 5 mit einem mit dem verkehrssteuernden Prozessor (94) gesteuerten Speicher (110) zum Speichern von manuell eingegebenen Wegebestimmungsdaten und manuell eingegebenen Transportsystembefehlen und zur Abgabe der gespeicherten, manuell eingegebenen Wegebestimmungsdaten und der gespeicherten, manuell eingegebenen Transportsystembefehle an den verkehrssteuernden Prozessor (94).

8. System nach Anspruch 5, dadurch gekennzeichnet, daß der verkehrssteuernde Prozessor (94) einen Speicher (110) besitzt, der einen Satz von Programmbefehlen zum Umsetzen der Wegebestimmungsdaten in die genannten Transportsystembefehle und zum Umsetzen der manuell eingegebenen Wegebestimmungsbefehle in die genannten Transportsystembefehle dient; sowie eine elektronische Verarbeitungseinrichtung, die für den Empfang der genannten Wegebestimmungsdaten von dem zur Überwachung und Steuerung dienenden Computersystem (38) mit diesem gekoppelt ist und für den Empfang der manuell eingegebenen Wegebestimmungsdaten von der Steuerdateneingabe- und -anzeigeeinheit (100) mit dieser gekoppelt ist und die mit dem Speicher (110) gekoppelt ist und mit dem Materialflußlogikprozessor (96) gekoppelt ist, um an diesen zum Ausführen des genannten Satzes von Programmbefehlen auf Grund der von dem zur Überwachung und Steuerung dienenden Computersystem empfangenen Wegebestimmungsdaten und bei Nichtvorliegen der genannten Wegebestimmungsdaten auf Grund der von dem Steuersatz kommenden, manuell eingegebenen Wegebestimmungsbefehle die genannten Transportsystembefehle an den Materialflußlogikprozessor abzugeben.

9. System nach Anspruch 8, dadurch gekennzeichnet, daß die elektronische Verarbeitungseinrichtung eine Zentraleinheit (102) zum Ausführen des in dem Speicher (68a, 68b) gespeicherten Satzes von Programmbefehlen besitzt; ferner einen Multiplexer (104) zum Koppeln der Zentraleinheit (102) mit dem Materialflußlogikprozessor (96) und mit der Steuerdateneingabe-und -anzeigeeinheit; und eine Ein- und Ausgabeeinrichtung zum Koppeln des Multiplexers (104) mit dem zur Überwachung und Steuerung dienenden Computersystem (38).

10. System nach Anspruch 5, dadurch gekennzeichnet, daß der Materialflußlogikprozessor einen mit der Steuerdateneingabe-und -anzeigeeinheit (100) und dem verkehrssteuernden Prozessor (94) gekoppelten Nachrichtenmultiplexer (104) zum Vielfachübertragen der genannten Transportsystembefehle und der manuell eingegebenen Transportsystembefehle aufweist; ferner eine mit dem Nachrichtenmultiplexer (104) gekoppelte Zentraleinheit (102) zum Umsetzen der von dem verkehrssteuernden Prozessor (94) kommenden Transportsystembefehle in die elektrischen Signale zur Steuerung des Transportsystems, wobei die Zentraleinheit (102) die manuell eingegebenen Transportsystembefehle zur Steuerung des Transportsystems in die elektrischen Signale umsetzt, und eine Schnittstelle zum Koppeln der Zentraleinheit mit dem Transportsystem.

11. System nach Anspruch 1, dadurch gekennzeichnet, daß das Transportsystem bei jedem der numerisch computergesteuerten Bearbeitungszentren (26) und jeder der Be- und Entladestationen (24) eine Bahn (14) besitzt, ferner eine Mehrzahl von sich längs der Bahn bewegenden Wagen (20) zum Transport von Teilen von der Be- und Entladestation zu den numerisch computergesteuerten Bearbeitungszentren (26), ferner eine in der Bahn (14) angeordnete Einrichtung (15a) zum Bewegen der Wagen (20) längs der Bahn auf Grund der genannten elektrischen Signale; und eine Mehrzahl von Pendelantrieben (32), von denen mindestens einer zwischen der genannten Bahn und jedem der numerisch computergesteuerten Bearbeitungszentren angeordnet ist und dazu dient, auf Grund der genannten elektrischen Signale einen Teil von einem vorherbestimmten der Wagen (20) zu einem entsprechenden der Bearbeitungszentren (26) zu bewegen.

12. System nach Anspruch 1, dadurch gekennzeichnet, daß jedes der numerisch computergesteuerten Bearbeitungszentren (26) eine numerisch gesteuerte Werkzeugmaschine (28) und ein mit der numerisch gesteuerten Maschine gekoppeltes Maschinensteuersystem (30) besitzt, das für den Empfang der Mehrzahl von Sätzen von Programmen für die numerisch gesteuerte maschinelle Bearbeitung von Teilen und der genannten Programmabbildung von dem zur Überwachung und Steuerung dienenden Computersystem (38) mit diesem verbunden ist und für den Empfang von Werkzeugmaschinenbefehlen von dem Materialfluß-Steuergerät (22) mit diesem gekoppelt ist und dazu dient, auf Grund von Werkzeugmaschinenbefehlen und bei Nichtvorliegen von Werkzeugmaschinenbefehlen auf Grund von von der Bedienungsperson eingegebenen Befehlen einen aus den Sätzen von Programmen für die numerisch gesteuerte maschinelle Bearbeitung von Teilen ausgewählten Satz entsprechend der Programmabbildung auszuführen.

13. System nach Anspruch 12, dadurch gekennzeichnet, daß das Maschinensteuersystem (30) eine Ein- und Ausgabeeinrichtung für den Empfang der von der Bedienungsperson eingegebenen Maschinenbefehle und für die Sichtdarstellung von den Betrieb der Werkzeugmaschine anzeigenden Daten besitzt; ferner einen Speicher (128) zum Speichern der von dem zur Überwachung und Steuerung dienenden Computersystem (38) abgegebenen, ausgewählten Sätze von Programmen für die numerisch gesteuerte maschinelle Bearbeitung von Teilen und der genannten Programmabbildung; ferner eine Zentraleinheit (124), die dazu dient, auf Grund der Werkzeugmaschinenbefehle und bei Nichtvorliegen von Werkzeugmaschinenbefehlen auf Grund der von der Bedienungsperson eingegebenen Befehle den aus dem Satz von Programmen für die numerisch gesteuerte maschinelle Bearbeitung von Teilen ausgewählten Satz entsprechend der Programmabbildung auszuführen und auf Grund von von der Werkzeugmaschine zurückgeführten Daten den Betrieb der Werkzeugmaschine zu steuern; ferner einen Nachrichtenmultiplexer (126) zum Koppeln der Zentraleinheit (124) mit dem zur Überwachung und Steuerung dienenden Computersystem (38), dem Speicher (128) und der Ein- und Ausgabeeinrichtung; ferner eine Schnittstelleneinrichtung (146) zum Koppeln der Zentraleinheit (124) mit dem Materialfluß-Steuergerät (22) und dem Bearbeitungszentrum (26); und ein mit der Werkzeugmaschine gekoppeltes Rückführsystem (144a, b, c) zum Übertragen von Rückführdaten von der Werkzeugmaschine zu dem zentralen Verarbeitungssystem.

14. System nach Anspruch 13, dadurch gekennzeichnet, daß das Maschinensteuersystem eine Schnittstelle (134) zum Koppeln der Zentraleinheit (124) mit einem Diagnosenachrichtensystem besitzt.

15. System nach einem der vorhergehenden Ansprüche, in dem während der Ausführung des aus den Sätzen von Programmen zur numerisch gesteuerten maschinellen Bearbeitung von Teilen ausgewählten Satzes jedes der numerisch computergesteuerten Bearbeitungszentren (26) Daten generiert, die den Betrieb der Werkzeugmaschine, einschließlich der kumulativen Schneidwerkzeugverwendung, anzeigen, und daß eine mit dem zur Überwachung und Steuerung dienenden System angekoppelte Ausgabeeinrichtung diese kumulative Schneidwerkzeugverwendung angebende Information abgibt.

16. System nach Anspruch 15, dadurch gekennzeichnet, daß die Ausgabeeinrichtung einen Drucker (54) besitzt.

FIG. IA

FIG. I

FIG. IB

FIG. 2

SUPERVISORY
CONTROL COMPUTER SYSTEM   39

FIG. 3

TO LINE ADAPTORS OF FIG. 2

MATERIAL HANDLING SYSTEM CONTROLLER 22

FIG. 4

EP 0 044 565 B1

FIG. 5

MACHINE CONTROL
SYSTEM 30

SCCS   38

SYSTEM
MANAGER
INTERFACE

INPUT

200

202   COMMAND
OR DATA
?

DATA

204   STORE
DATA

OUTPUT
PART
PROGRAMS

206

COMMAND

IS
COMMAND
VALID
?

208

NO

INVALID
COMMAND

210
212

TRANSLATE INPUT
INFORMATION
INTO
ROUTING
DATA

CHECK CART,
FIXTURE AND
MATERIAL

214

216   ALL
REQUIST.
NO. OF CARTS
FIXTURES AND
MATERIAL
AVAILABLE

218   NO

INVALID
ROUTE

220   YES

INITIATE
EXECUTION OF
ROUTES

SCHEDULER

CHECK
STATUS OF
CARTS AND
SHUTTLES

222

224   DISPLAY
CART AND SHUTTLE
STATUS

226

IS
NEW ROUTE
COMPATIBLE
?

NO

INVALID
ROUTE

228

YES

OUTPUT
ROUTING
DATA

230

ROUTER

FIG. 6

# FIG. 7

MHSC 22 SOFTWARE

OUTPUT OF
ROUTING DATA

SMI — 322

ROUTER — 324

UPDATE
MEMORY
300

INPUT
ROUTING
DATA
302

TRANSLATE ROUTING
DATA INTO CART AND
SHUTTLE COMMANDS
304

WAIT

306
IS
EXECUTION
OF CART & SHUTTLE
COMMANDS
COMPLETED
NO

308 YES

TRAFFIC

310
INPUT
CART AND SHUTTLE
STATUS

312
INPUT PALLET
READER
DATA

320
ABORT

314 DOES
PALLET CODE
DATA MATCH ACTUAL
PALLET
?
NO

YES

316
INITIATE EXECUTION
OF SELECTED SET
OF NC PART
PROGRAMS

OPERATIONS

26